(19) Europäisches Patentamt
European Patent Office
Office européen des brevets

(11) EP 4 759 857 A1

(12) # EUROPEAN PATENT APPLICATION

(43) Date of publication:
**17.06.2026 Bulletin 2026/25**

(21) Application number: **24218969.4**

(22) Date of filing: **11.12.2024**

(51) International Patent Classification (IPC):
***C08G 18/77*** *(2006.01)* ***C08G 18/20*** *(2006.01)*
***C08G 18/28*** *(2006.01)* ***C08G 18/32*** *(2006.01)*
***C08G 18/42*** *(2006.01)* ***C08G 18/73*** *(2006.01)*
***C08G 18/79*** *(2006.01)* ***C08G 18/78*** *(2006.01)*
***C08G 18/72*** *(2006.01)*

(52) Cooperative Patent Classification (CPC):
**C08G 18/2081; C08G 18/2825; C08G 18/283; C08G 18/3206; C08G 18/4277; C08G 18/722; C08G 18/73; C08G 18/771; C08G 18/7837; C08G 18/792**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Covestro Deutschland AG**
**51373 Leverkusen (DE)**

(72) Inventors:
- **Darmandeh, Heidar**
  **40597 Düsseldorf (DE)**
- **Richter, Frank**
  **51373 Leverkusen (DE)**
- **Latorre Martinez, Irene Cristina**
  **40764 Langenfeld (DE)**
- **Pires, Raul**
  **50670 Köln (DE)**

(74) Representative: **Levpat**
**c/o Covestro AG**
**Gebäude K12**
**51365 Leverkusen (DE)**

(54) **PROCESS FOR PREPARING A POLYISOCYANATE COMPOSITION COMPRISING AT LEAST ONE ISOCYANURATE AND AT LEAST ONE ALLOPHANATE STRUCTURE**

(57) The invention relates to a process for preparing a polyisocyanate composition comprising at least one isocyanurate structure and at least one allophanate structure, comprising reacting a composition, comprising A) (3R,3aR,6S,6aR)-3,6-diisocyanato-2,3,3a,5,6,6a-hexahydrofuro[3,2-b]furan and/or (3S,3aR,6S,6aR)-3,6-diisocyanato-2,3,3a,5,6,6a-hexahydrofuro[3,2-b]furan and/or (3R,3aR,6R,6aR)-3,6-diisocyanato-2,3,3a,5,6,6a-hexahydrofuro[3,2-b]furan, B) at least one alcohol with an OH-functionality of ≥ 1 and C) optionally at least one diisocyanate, different from the diisocyanate/s of component A), wherein the equivalent ratio of OH-groups of component B) to NCO-groups of components A) and C) is ≥ 0.05:1 to ≤ 0.25 :1, to form a raw polyisocyanate composition, and subjecting the raw polyisocyanate composition to a distillation, preferably to a thin film distillation, a short path distillation and/or a falling film distillation, in order to at least partially remove unreacted moieties of components A), B) and C) to obtain the polyisocyanate composition comprising at least one isocyanurate structure and at least one allophanate structure. The invention also relates to the polyisocyanate composition obtainable by the inventive process.

EP 4 759 857 A1

## Description

The invention relates to a process for preparing a polyisocyanate composition comprising at least one isocyanurate structure and at least one allophanate structure, comprising reacting a composition, comprising A) (3R,3aR,6S,6aR)-3,6-diisocyanato-2,3,3a,5,6,6a-hexahydrofuro[3,2-b]furan and/or (3S,3aR,6S,6aR)-3,6-diisocyanato-2,3,3a,5,6,6a-hexahydrofuro[3,2-b]furan and/or (3R,3aR,6R,6aR)-3,6-diisocyanato-2,3,3a,5,6,6a-hexahydrofuro[3,2-b]furan, B) at least one alcohol with an OH-functionality of ≥ 1 and C) optionally at least one diisocyanate, different from the diisocyanate/s of component A), wherein the equivalent ratio of OH-groups of component B) to NCO-groups of components A) and C) is ≥ 0.05:1 to ≤ 0.25 :1, to form a raw polyisocyanate composition, and subjecting the raw polyisocyanate composition to a distillation, preferably to a thin film distillation, a short path distillation and/or a falling film distillation, in order to at least partially remove unreacted moieties of components A), B) and C) to obtain the polyisocyanate composition comprising at least one isocyanurate structure and at least one allophanate structure. The invention also relates to the polyisocyanate composition obtainable by the inventive process.

Monomeric diisocyanates are practically not used as crosslinkers in polyurethane systems due to their volatility and toxicological properties. Usually higher molecular weight derivatives are used, modified for example with isocyanurate, iminooxadiazinedione, uretdione, urethane or allophanate groups. An overview of these polyisocyanates and their production method is exemplified in Laas et al., J. Prakt. Chem. 336, 1994, 185-200.

Monomeric isocyanates formed from renewable raw materials and their higher molecular weight derivatives are playing an ever greater part not least, quite simply, for reasons of sustainability and also for reasons of cost.

This explains, inter alia, the development of diisocyanates based on renewable and inexpensive sugars, such as 1:4-3:6 dianhydrohexitols for example (J. Thiem et al., Macromol. Chem. Phys. 202, 3410-3419, 2001.

As apparent from examples 1, 2 and 3 of the present document polyisocyanates which comprise isocyanurate and allophanate structures and are based on the above mentioned diisocyanates cannot be purified via technically relevant methods like thin-film-evaporation due to their high melt-viscosities. Furthermore, the solubility of these polyisocyanates is limited and results in precipitation of the material. For industrial application however, it is necessary to free the reaction mixture from unreacted, acutely toxic monomeric diisocyanates and to get soluble polyisocyanates.

It was an object of the present invention to provide a process, which solves these problems and leads to polyisocyanate composition comprising at least one isocyanurate and at least one allophanate structure, which is well soluble and has a low content of monomeric diisocyanates.

This object has been achieved by a process for preparing a polyisocyanate composition comprising at least one isocyanurate structure and at least one allophanate structure, comprising

reacting a composition, comprising

A) (3R,3aR,6S,6aR)-3,6-diisocyanato-2,3,3a,5,6,6a-hexahydrofuro[3,2-b]furan and/or (3S,3aR,6S,6aR)-3,6-diisocyanato-2,3,3a,5,6,6a-hexahydrofuro[3,2-b]furan and/or (3R,3aR,6R,6aR)-3,6-diisocyanato-2,3,3a,5,6,6a-hexahydrofuro[3,2-b]furan,
B) at least one alcohol with an OH-functionality of ≥ 1
and
C) optionally at least one diisocyanate, different from the diisocyanate/s of component A),

wherein the equivalent ratio of OH-groups of component B) to NCO-groups of components A) and C) is 0.05:1 to 0.25 :1,

to form a raw polyisocyanate composition,

and subjecting the raw polyisocyanate composition to a distillation, preferably to a thin film distillation, a short path distillation and/or a falling film distillation, in order to at least partially remove unreacted moieties of components A), B) and C) to obtain the polyisocyanate composition comprising at least one isocyanurate structure and at least one allophanate structure.

WO2011/000587 describes the synthesis of higher molecular weight derivates of isocyanates based on (3R,3aR,6S,6aR)-3,6-diisocyanato-2,3,3a,5,6,6a-hexahydrofuro[3,2-b]furan, (3S,3aR,6S,6aR)-3,6-diisocyanato-2,3,3a,5,6,6a-hexahydrofuro[3,2-b]furan or (3R,3aR,6R,6aR)-3,6-diisocyanato-2,3,3a,5,6,6a-hexahydrofuro[3,2-b]furan, inter alia of isocyanurates and of allophanates of these diisocyanates. This document does not focus on the synthesis of polyisocyanates, which comprise both allophanate and isocyanurate structures. There is no explicit information about the minimum ratio of OH- to NCO-groups in which the alcohols and diisocyanates have to be reacted and no hint that this minimum ratio is essential with regard to the purification by distillation.

The references to "comprising", "containing", etc. preferably denote "substantially consisting of" and very particularly preferably denote "consisting of". In the present invention, any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

Isocyanurate structures (also referred to as isocyanurate groups) are understood as structural units of the following general formula:

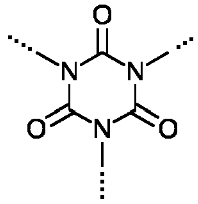

Isocyanurate structure

Allophanate structures (also referred to as allophanate groups) are understood as structural units of the following general formula:

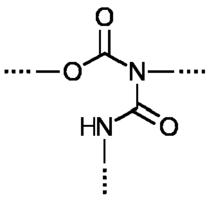

Allophanate structure

Composition comprising components A to C and its reaction

According to this invention, (3R,3aR,6S,6aR)-3,6-diisocyanato-2,3,3a,5,6,6a-hexahydrofuro[3,2-b]furan is referred to "ISODI", (3S,3aR,6S,6aR)-3,6-diisocyanato-2,3,3a,5,6,6a-hexahydrofuro[3,2-b]furan is referred to "IDDI" and (3R,3aR,6R,6aR)-3,6-diisocyanato-2,3,3a,5,6,6a-hexahydrofuro[3,2-b]furan is referred to "IMANDI".

The precursors for the synthesis of ISODI and IDDI can be obtained from different sources but are preferably obtained from a biobased source.

Optionally the composition containing component A) may comprise at least one further diisocyanate, different from the diisocyanate/s of component A).

These diisocyanates are aromatic, araliphatic, aliphatic or cycloaliphatic diisocyanates. Preference is given to monomeric diisocyanates, such as pentamethylene diisocyanate (PDI), hexamethylene diisocyanate (HDI), 2-methylpentane 1,5-diisocyanate, 2,2,4-trimethylhexane 1,6-diisocyanate, 2,4,4-trimethylhexane 1,6-diisocyanate, 4-isocyanatomethyloctane 1,8-diisocyanate, 3(4)-isocyanatomethyl-1-methylcyclohexyl isocyanate (IMCI), isophorone diisocyanate (IPDI), 1,3- and 1,4-bis(isocyanatomethyl)benzene (XDI) and/or 1,3- and 1,4-bis(isocyanatomethyl)cyclohexane (H6XDI). The amount of the optional further diisocyanates C) is guided by the specific application and, if they are used at all, may vary within wide limits. They are used in amounts of preferably 0 to 5 % by weight, more preferably 0 to 2 % by weight, even more preferably 0 to 1 % by weight, based on the total amount of compounds that have NCO groups. It is however most preferred that their amount is 0, i.e. that only component A) is used.

It is irrelevant by which processes the above mentioned diisocyanates are generated, i.e. with or without use of phosgene. Preferred in the industrial production of the isocyanates is the phosgenation in the liquid-phase or the gas-phase and even more preferred by gas-phase phosgenation as described for example in EP 0 764 633 A2. ISODI, IDDI and IMANDI are preferably prepared from the respective diamines.

Component B) comprises at least one alcohol with an OH-functionality of ≥ 1. This at least one alcohol with an OH-functionality of ≥ 1 is selected from the group consisting of

B1) monomeric alcohols with an OH-functionality of ≥ 1 (also referred to as monomeric monohydroxy-functional or polyhydroxy-functional alcohols),

B2) polymeric alcohols with an OH-functionality of 1 (also referred to as polymeric monohydroxy-functional alcohols), and

B3) polymeric alcohols with an OH-functionality of > 1 (also referred to as polymeric polyhydroxy-functional alcohols).

In an preferred embodiment the monomeric monohydroxy-functional alcohols of component B1) are compounds with a molecular weight of 32.04 g/mol to 250 g/mol, the chains of which can be saturated or unsaturated, linear or branched, aliphatic or cycloaliphatic or aromatic. More preferably the carbon chains have 1 to 12 carbon atoms.

Examples of suitable alcohols of component B1) are methanol, ethanol, n-propanol, isopropanol, n-butanol, n-hexanol, 2-ethyl-1-hexanol, ethylene glycol, propylene glycol, the isomeric butanediols, 2-ethyl-1,3-hexanediol or glycerin, ether alcohols, such as 1-methoxy-2-propanol, 3-ethyl-3-hydroxymethyloxetane, tetrahydrofurfuryl alcohol, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol and dipropylene glycol, ester alcohols, such as ethylene glycol monoacetate, propylene glycol monolaurate, glycerol mono- and diacetate, glycerol monobutyrate or 2,2,4-trimethyl-1,3-pentanediol monoisobutyrate, unsaturated alcohols such as allyl alcohol, 1,1-dimethylallyl alcohol or olein alcohol, and araliphatic alcohols such as benzyl alcohol.

In a preferred embodiment the polymeric monohydroxy-functional alcohols B2) are polyether monools. The alcohols of component B2) preferably have a hydroxyl number of 3 to 1000 mg KOH/g, preferably 50 to 200 mg KOH/g, measured according to DIN 53240-3:2016-03. The alcohols of component B2) preferably have a number average molecular weight Mn in a range from 62 to 18 000 g/mol, particularly preferably from 62 to 4000 g/mol.

Polyether monools can be prepared by catalytic addition of one or more alkylene oxides to H-functional starter compounds. Alkylene oxides with 2 to 24 carbon atoms can be used as alkylene oxides (epoxides). Preference is given to styrene oxide, ethylene oxide, propylene oxide, tetrahydrofuran, butylene oxide and epichlorohydrin. Also mixtures of these starters can be used.

For the purpose of this invention "H-functional" denotes a starter compound that has H atoms that are active towards alkoxylation. The H-functional starter compounds are monofunctional for the production of polyether monools. Alcohols, amines, thiols and carboxylic acids can be used as such compounds. Examples of preferred monofunctional alcohols are methanol, ethanol, 1-propanol, 2-propanol, 1-butanol, 2-butanol, tert-butanol, 3-buten-1-ol, 3-butyn-1-ol, 2-methyl- 3-buten-2-ol, 2-methyl-3-butyn-2-ol, propyl alcohol, 2-methyl-2-propanol, 1-tert-butoxy-2-propanol., 1-pentanol, 2-pentanol, 3 - Pentanol, 1-hexanol, 2-hexanol, 3-hexanol, 1-heptanol, 2-heptanol, 3-heptanol, 1-octanol, 2-octanol, 3-octanol, 4-octanol, 1-dodecanol, phenol, 2-hydroxybiphenyl, 3-hydroxybiphenyl, 4-hydroxybiphenyl, 2-hydroxypyridine, 3-hydroxypyridine or 4-hydroxypyridine. Possible monofunctional amines are: butylamine, tert-butylamine, pentylamine, hexylamine, aniline, aziridine, pyrrolidine, piperidine, morpholine. The following monofunctional thiols can be used: ethanethiol, 1-propanethiol, 2-propanethiol, 1-butanethiol, 3-methyl-1-butanethiol, 2-butene-1-thiol, thiophenol. The following may be mentioned as monofunctional carboxylic acids: formic acid, acetic acid, propionic acid, butyric acid, fatty acids such as stearic acid, palmitic acid, oleic acid, linoleic acid, linolenic acid, benzoic acid, acrylic acid. Compounds from the group of glycol ethers, such as diethylene glycol monoethyl ether, are also suitable as starter compounds.

In a preferred embodiment the polymeric polyhydroxy-functional alcohols B3) are polyether polyols, polyester polyols and polycarbonate poylols. The alcohols of component B2) preferably have a hydroxyl number of 3 to 1000 mg KOH/g, preferably 14 to 1000 mg KOH/g, measured according to DIN 53240-3:2016-03. The alcohols of component B2) preferably have a number average molecular weight Mn in a range from 62 to 18 000 g/mol, particularly preferably from 62 to 4000 g/mol.

Polyester polyols can be produced analogously to the production of the polyether monools described above under component B2). The alkylene oxides described under component B2) can be used as alkylene oxides. However, to produce the polyether polyols, H-functional starter molecules with an average functionality of >1, preferably ≥1.5 and ≤6, particularly preferably ≥2 and ≤6 are used.

Suitable starter molecules are low molecular weight diols, triols such as ethanediol, diethylene glycol, triethylene glycol, tetraethylene glycol, 1,2-propanediol, dipropylene glycol, tripropylene glycol, tetrapropylene glycol, 1,3-propanediol, 1,4-butanediol, 1,3-butanediol, 2,3-butandiol, 1,5-pentanediol, 1,6-hexanediol, 2,2-dimethyl-1,3-propanediol, 1,4-dihydroxycyclohexane, 1,4-dimethylolcyclohexane, 1,8-octanediol, 1,10-decanediol, 1,12-dodecanediol or mixtures thereof, optionally with concomitant use of higher-functional polyols such as trimethylolpropane, glycerol or pentaerythritol. Cycloaliphatic and/or aromatic di-hydroxyl and polyhydroxyl compounds are naturally also possible as polyhydric alcohols for producing the polyether polyols.

Possible polyester polyols B3) are, in particular, linear polyester diols or weakly branched polyester polyols as can be produced in a known manner from aliphatic, cycloaliphatic or aromatic dicarboxylic or polycarboxylic acids, e.g. succinic, methylsuccinic, glutaric, adipic, pimelic, suberic, azelaic, sebacic, nonanedicarboxylic, decanedicarboxylic, terephthalic, isophthalic, o-phthalic, tetrahydrophthalic, hexahydrophthalic, cyclohexanedicarboxylic, maleic, fumaric, malonic or trimellitic acid, and acid anhydrides, e.g. o-phthalic, trimellite or succinic anhydride or mixtures of at least one of these, by reaction with polyhydric alcohols, e.g. ethanediol, diethylene, triethylene, tetraethylene glycol, 1,2-propanediol, dipropylene, tripropylene, tetrapropylene glycol, 1,3-propanediol, 1,4-butanediol, 1,3-butanediol, 2,3-butandiol, 1,5-pentanediol, 1,6-hexanediol, 2,2-dimethyl-1,3-propanediol, 1,4-dihydroxycyclohexane, 1,4-dimethylolcyclohexane,

1,8-octanediol, 1,10-decanediol, 1,12-dodecanediol or mixtures thereof, optionally with concomitant use of higher-functional polyols such as trimethylolpropane, glycerol or pentaerythritol. Cycloaliphatic and/or aromatic di-hydroxyl and polyhydroxyl compounds are naturally also possible as polyhydric alcohols for producing the polyester polyols. Instead of the free polycarboxylic acids, it is also possible to use the corresponding polycarboxylic anhydrides or corresponding polycarboxylic esters of lower alcohols or mixtures of at least two thereof for producing the polyesters.

The polyester polyols can of course also be homopolymers or copolymers of lactones, which are preferably obtained by molecular addition of lactones or lactone mixtures, e.g. butyrolactone, ε-caprolactone and/or methyl-ε-caprolactone, onto suitable difunctional and/or higher-functional starter molecules, e.g. the low molecular weight, polyhydric alcohols mentioned above as formative components for polyester polyols. The corresponding polymers of ε-caprolactone are preferred. Such polycaprolactone polyols are, for example, commercially available from Ingevity Corp., South Carolina, USA under the trademark CAPA®.

Possible polycarbonates polyols B3) are, for example, those which can be produced by reaction of diols such as 1,4-butanediol and/or 1,6-hexanediol with diaryl carbonates such as diphenyl carbonate, dialkyl carbonates such as dimethyl carbonate or phosgene or mixtures of at least two thereof. The hydrolysis resistance of the polyurethane dispersions can be improved by the at least partial use of polycarbonates having hydroxyl groups.

The alcohols mentioned above can be added explicitely for the purpose of forming allophanate groups or can be added as (incorporatable) solvents. The latter applies in particular to the alcohols of component B1) as well as the higher molecular weight polyethylene glycols, propylene glycols, mixed polyethylene/polypropylene glycols and their monoalkyl ethers according to component B3). "Incorporatable solvents" means that the solvents carry isocyanate-reactive groups and are incorporated into the product via these groups, in the present case via allophanate groups.

It is an important aspect of the invention that the equivalent ratio of OH-groups of component B) to NCO-groups of components A) and C) is 0.05:1 to 0.25 :1. The ratio is preferably $\geq$ 0.05 :1 to $\leq$ 0.20: 1, more preferably $\geq$ 0.05 :1 to $\leq$ 0.15:1.

In a preferred embodiment (embodiment I) the reaction of components A), B) and optionally C) is conducted in a one stage process. The reaction can be thermally induced and/or conducted in the presence of at least one catalyst which accelerates the formation of allophanate and isocyanurate structures (component D1).

In an alternative preferred embodiment (embodiment II) the reaction of components A), B) and optionally C) is conducted in a two-stage process, comprising an urethanization reaction as the first step and an allophanatization reaction and trimerization reaction as the second step.

The first step can be thermally induced and/or conducted in the presence of at least one catalyst which accelerates the formation of urethane groups (component D2).

The second step can be thermally induced and/or conducted in the presence of at least one catalyst which accelerates the formation of allophanate and isocyanurate structures (component D3).

Suitable catalysts according to component D1) are, for example, compounds of ionic structure for example with "onium" cations (ammonium, phosphonium, etc.) and nucleophilic anions such as hydroxide, alkanoate, carboxylate, heterocycles having at least one negatively charged nitrogen atom in the ring, such as azolate, imidazolate, triazolate and tetrazolate, in particular their fluorides, hydrogendifluorides, higher polyfluorides or mixtures of these (adducts of more than one equivalent of HF onto compounds containing fluoride ions), also neutral bases such as tertiary amines or phosphanes (phosphines). Preferred catalysts of components D1 are quart. ammonium hydroxides, such as benzyltrimethylammonium hydroxide, and azolates, in particular their fluorides, hydrogendifluorides, higher polyfluorides or mixtures of these, (adducts of more than one equivalent of HF onto compounds containing fluoride ions), such as 5-azaspiro[4.5]decan-5-ium fluoride hydrofluoride.

Suitable catalysts according to component D2) are usually based on metal and transition metal compounds based on aluminum, tin, zinc, titanium, manganese, bismuth or zirconium, such as dibutyltin dilaurate, bismuth neodecanoate, zinc octoate, titanium tetrabutylate or zirconium octoate, or also tertiary amines such as 1,4-diazabicyclo-[2.22.]-octane.

Suitable catalysts according to component D3) are the catalysts mentioned above under component D1). The same preferred embodiments apply.

The progress of the reaction in the process of embodiment I or II can be monitored by determining the NCO content by titrimetric means as per DIN EN ISO 11909:2007-05. On attainment of the desired NCO content ("degree of conversion") the reaction is stopped by suitable means depending on the kind of reaction and/or the use of a catalyst or not. Preferably catalysts are deactivated by addition of suitable catalyst poisons.

According to a further preferred embodiment, the reaction is taken to a point where the reaction mixture has a degree of conversion of 5 % to 40%, preferably of 10% to 30%.

"Degree of conversion " is defined as the percentage of the isocyanate groups originally present in the starting mixture that is consumed during the reaction according to the invention. The degree of of conversion in percent can be calculated according to the following formula:

Degree of conversion = (NCO start – NCO end) / NCO start x 100.

The reaction can be discontinued, for example, when the target degree of conversion has been reached. This degree of conversion is reached generally after a reaction time of 30 minutes to 8 hours, preferably of 1 to 6 hours.

The reaction may be terminated for example by cooling the reaction mixture to room temperature. In general, however, the reaction is ended by addition of a catalyst poison and optional subsequent brief heating of the reaction mixture to a temperature above 80°C, for example. It is also possible to use a combination of both options to terminate the reaction, i.e. by cooling the mixture to room temperature and adding a catalyst poison, wherein the catalyst poison can be added before, during or after the reaction mixture is cooled down.

Examples of suitable catalyst poisons are inorganic acids such as hydrochloric acid, phosphorous acid or phosphoric acid, acyl chlorides such as acetyl chloride, benzoyl chloride or isophthaloyl dichloride, sulfonic acids and sulfonic esters, such as methanesulfonic acid, p-toluenesulfonic acid, trifluoromethanesulfonic acid, perfluorobutane sulfonic acid, dodecylbenzenesulfonic acid, methyl and ethyl p-toluenesulfonates, monoalkyl and dialkyl phosphates such as monotridecyl phosphate, dibutyl phosphate, and dioctyl phosphate, and also silylated acids, such as trimethylsilyl methanesulfonate, trimethylsilyl trifluoromethanesulfonate, tris(trimethylsilyl) phosphate, and diethyl trimethylsilyl phosphate.

The amount of catalyst poison needed to end the reaction is dependent here on the amount of catalyst used; in general, an equivalent amount of the catalyst poison is used, based on the catalyst used at the start. Taking account, though, losses of catalyst possibly occurring during the reaction, 20 to 80 equivalent% of the catalyst poison, based on the amount of catalyst originally used, may also be sufficient to end the reaction.

As described above the alcohols of component B1) as well as the higher molecular weight polyethylene glycols, propylene glycols, mixed polyethylene/polypropylene glycols and their monoalkyl ethers according to component B3) may be used as incorporatable solvents.

In addition to or instead of these incorporatable solvents, inert solvents may be used, such as: hexane, toluene, xylene, chlorobenzene, ethyl acetate, butyl acetate, diethylene glycol dimethyl ether, dipropylene glycol dimethyl ether, ethylene glycol monomethyl ether acetate, ethylene glycol monoethyl ether acetate, diethylene glycol ethyl ether acetate, diethylene glycol butyl ether acetate, propylene glycol monomethyl ether acetate, 1-methoxypropyl-2-acetate, 3-methoxy-n-but yl acetate, propylene glycol diacetate, Acetone, methyl ethyl ketone, methyl isobutyl ketone, cyclohexanone, lactones such as ß-propiolactone, γ-butyrolactone, ε-caprolactone and ε -methylcaprolactone, but also solvents such as N-methylpyrrolidone and N-methylcaprolactam, 1,2-propylene carbonate, methylene chloride, dimethyl sulfoxide , triethyl phosphate or any mixtures of such solvents.

The reaction mixture obtained after the reaction according to embodiment I or II is referred to herein as "raw polyisocyanate composition".

Distillation step

The obtained raw polyisocyanate composition is subjected to distillation in order to at least partially remove unreacted moieties of components A), B) and also C), if present. The expression "at least partially" refers to the fact that the content of unreacted monomeric diisocyanates is/cannot be 100% removed by distillation, so that small moieties remain in the end product, i.e. the polyisocyanate compostition (see the following statements on the residual monomeric diisocyanate content under the heading "Polyisocyanate composition").

In addition to unreacted moieties of components A), B) and C) other volatile constitutents, if present, such as the inert solvents, mentioned above, can be at least partially removed by the distillation step.

The distillation is preferably carried out as thin film distillation, short path distillation and/or falling film distillation, preferably in a vacuum, in one or several evaporator stages, with the one or the final evaporator stage of the several stages preferably having a pressure of less than 1.0 mbar, preferably less than 0.25 mbar, particularly preferably less than 0.2 mbar. On a production scale, the distillation is preferably carried out in several stages, with pressures of less than 30 mbar in the first stages, preferably less than 20 mbar, particularly preferably less than 10 mbar and a pressure of less than 1 mbar, preferably less than 0.25 mbar, particularly preferably less than 0.2 mbar in the last evaporator stage.

In an embodiment of the invention a catalyst poison is added to the raw polyisocyanate composition before or during the distillation is performed.

The distillation is preferably carried out at a temperature of 100 to 200°C, more preferably of 120 to 200°C.

It is possible to use different or multiple distillation methods such as thin film distillation, falling film distillation or short path distillation.

The design of the evaporator stages, evaporation units and distillation apparatus for the possible distillation methods can be chosen arbitrarily. It can be advantageous to heat these with direct steam and/or a pressurized water circuit. In addition, the evaporation units preferably contain several condensers and vacuum pumps. In a preferred embodiment, the distillation setup comprises or consists of three evaporator stages and particularly preferably comprises

or consists of a falling film evaporator as the first evaporation stage, a thin film evaporator or falling film evaporator as the second evaporator stage and a short-path evaporator as the third evaporator stage.

Polyisocyanate composition

The inventive process leads to polyisocyanate compositions with low residual monomeric diisocyanate content.

In a preferred embodiment, the inventive polyisocyanate composition is characterized in that it has a residual monomeric diisocyanate content of diisocyanates of components A) and C) of less than 1 % by weight, preferably less than 0.5 % by weight and more preferably less than 0.1 % by weight, based on the total weight of the polyisocyanate composition.

The residual monomeric diisocyanate content is determined by gas chromatography in accordance with DIN EN ISO 10283:2007-11 with internal standard.

In a preferred embodiment, the inventive polyisocyanate composition is characterized in that it has an NCO content determined in accordance with DIN EN ISO 11909:2007-05 of from 5.8 to 21.4% by weight, preferably from 7.8 to 20.4% by weight, particularly preferably from 8.8 to 19.4% by weight, based on the total weight of the polyisocyanate composition.

In addition to the isocyanurate structures and allophanate structures the inventive polyisocyanate composition may also contain urethane structures and minor amounts of iminooxadiazinedione, urea, uretdione, oxadiazinetrione, carbodiimide, thiourethane, thioallophanate and/or biuret structures.

In a preferred embodiment the inventive polyisocyanate composition contains at least one urethane structure iminooxadiazinedione structure, urea structure, uretdione structure, oxadiazinetrione structure, carbodiimide structure, thiourethane structure, thioallophanate structure and/or biuret structure in addition to the at least one isocyanurate structure and at least one allophanate structure.

In a preferred embodiment the polyisocyanate composition comprises, based on the total solid content of the polyisocyanate composition, ≥ 99 % by weight, preferably ≥ 99.5 % by weight and more preferably ≥ 99.9 % by weight of polyisocyanates containing at least one isocyanurate structure and at least one allophanate structure and at least one iminooxadiazinedione structure, urethane structure, urea structure, uretdione structure, oxadiazinetrione structure, carbodiimide structure, thiourethane structure, thioallophanate structure and/or biuret structure.

In a preferred embodiment of the above preferred embodiments the inventive polyisocyanate composition comprises an isocyanurate structure fraction of ≥ 5 to ≤ 80 mol%, preferably ≥ 20 to ≤ 75 mol%, in each case based on the total amount of isocyanurate, allophanate, iminooxadiazinedione, urethane, urea, uretdione, oxadiazinetrione, carbodiimide, thiourethane, thioallophanate and biuret structures in the polyisocyanate composition.

In a preferred embodiment of the 3 preferred embodiments mentioned above the inventive polyisocyanate composition comprises an allophanate group fraction of ≥ 10 to ≤ 65 mol%, preferably ≥ 15 to ≤ 60 mol%, in each case based on the total amount of isocyanurate, allophanate, iminooxadiazinedione, urethane, urea, uretdione, oxadiazinetrione, carbodiimide, thiourethane, thioallophanate and biuret structures in the polyisocyanate composition.

The fraction of urethane structures is at most 50 mol% (≥ 0 to ≤ 50 mol%), preferably at most 45 mol% (≥ 0 to ≤ 45 mol%), more preferably at most 35 mol% (≥ 0 to ≤ 35 mol%), in each case based on the total amount of isocyanurate, allophanate, iminooxadiazinedione, urethane, urea, uretdione, oxadiazinetrione, carbodiimide, thiourethane, thioallophanate and biuret structures in the polyisocyanate composition.

Minor amounts of iminooxadiazinedione, urea, uretdione, oxadiazinetrione, carbodiimide, thiourethane, thioallophanate and/or biuret structures means that their total fraction is at most 10 mol% (≥ 0 to ≤ 10 mol%), preferably at most 5 mol% (≥ 0 to ≤ 5 mol%), in each case based on the total amount of isocyanurate, allophanate, iminooxadiazinedione, urethane, urea, uretdione, oxadiazinetrione, carbodiimide, thiourethane, thioallophanate and biuret structures in the polyisocyanate composition.

The fractions (mol%) of isocyanurate, allophanate, iminooxadiazinedione, urethane, urea, uretdione, oxadiazinetrione, carbodiimide, thiourethane, thioallophanate and biuret structures are determined by $^{13}C$ NMR spectroscopy. The measurements are conducted on the Bruker DPX 400 or DRX 700 instruments on approx. 50% ($^{13}C$ NMR) samples in dry $C_6D_6$, at 100 or 176 MHz ($^{13}C$ NMR). The $C_6DsH$ present in the NMR solvent is used as reference signal (7.15 ppm, $^{1}H$-NMR), or the solvent signal itself (average signal of the 1:1:1 triplet at 128.0 ppm in the $^{13}C$ NMR).

The inventive polyisocyanate compositions are storage stable at 24°C for at least 14 days, preferably at least 21 days, more preferably at least 28 days. Storage stable means that they show no sign of solid formation.

In an embodiment, the NCO-groups of the inventive polyisocyanate composition are completely or partially blocked with conventional blocking agents such as phenols, such as phenol and p-chlorophenol, alcohols such as benzyl alcohol, oximes such as acetone oxime, methyl ethyl ketoxime, cyclopentanone oxime, cyclohexanone oxime, methyl isobutyl ketoxime, methyl tert-butyl ketoxime. diisopropyl ketoxime, diisobutyl ketoxime or acetophenone oxime, N-hydroxy compounds such as N-hydroxysuccinimide or hydroxypyridines, lactams such as ε-caprolactam, CH-acidic compounds such as ethyl acetoacetate or malonic esters, amines such as diisopropylamine, heterocyclic compounds

having at least one heteroatom such as mercaptans, piperidines. piperazines, pyrazoles, imidazoles, triazoles and tetrazoles, $\alpha$-hydroxybenzoic esters such as glycolic esters or hydroxamic esters such as benzyl methacrylo hydroxamate.

Unless stated otherwise, all number-average molecular weights given in this document are determined by GPC according to DIN EN ISO 13885-1:2021-11 using polystyrene as standard and tetrahydrofuran as eluent.

The comparative examples and examples which follow are intended to further illustrate the invention but without limiting it.

Examples:

All percentages, unless noted otherwise, are to be understood to mean percent by weight.

All reactions were conducted under a nitrogen atmosphere in glass apparatuses dried beforehand under reduced pressure at 150-200 °C.

Mol% data or the simple existence of the isocyanurate, iminooxadiazinedione, allophanate, urethane, urea, uretdione, oxadiazinetrione, carbodiimide, thiourethane, thioallophanate and/or biuret structure present in the polyisocyanates were determined by $^{13}C$ NMR spectroscopy and always relate, unless noted otherwise, to the sum total of the NCO conversion products. The measurements were conducted on the Bruker DPX 400 or DRX 700 instruments on approx. 50% ($^{13}C$ NMR) samples in dry $C_6D_6$, unless noted otherwise, at 100 or 176 MHz ($^{13}C$ NMR). The $C_6D_5H$ present in the NMR solvent was used as reference signal (7.15 ppm, $^1H$-NMR), or the solvent signal itself (average signal of the 1:1:1 triplet at 128.0 ppm in the $^{13}C$ NMR.

Dynamic viscosities were determined at 23 °C using the MCR 501 rheometer (from Anton Paar) in accordance with DIN EN ISO 3219:1994-10. Measurement at different shear rates ensured that Newtonian flow behavior can be assumed. Details regarding the shear rate can therefore be omitted.

The NCO content was determined by titration in accordance with DIN EN ISO 10283:2007-11.

Starting materials used

| | |
|---|---|
| Hexamethylene diisocyanate | HDI, Covestro Deutschland AG |
| Pentamethylene diisocyanate | PDI, Covestro Deutschland AG |
| 1-methoxypropyl-2-acetate | MPA, anhydrous, Azelis Deutschland GmbH |
| Butyl acetate | BA, Azelis Deutschland GmbH |
| CAPA 2067A | di-functional polycaprolactone polyol, molecular weight approx. 650g/mol, OH value 180 mgKOH/g, Ingevity, UK |
| 2-Ethylhexanol | Merck KGaA , Sigma Aldrich Deutschland |
| 2-Ethyl-1,3-hexandiol | Merck KGaA , Sigma Aldrich Deutschland |
| Genapol LA 030 | lauryl alcohol ethoxylate, Clariant Internationl Ltd, CH |
| Borchi® Kat 22 | Zinc catalyst 10% in MPA, Borchers GmbH |
| Benzyltrimethylammonium hydroxide | Merck KGaA , Sigma Aldrich Deutschland |

<u>Polyisocyanates</u>

Polyisocyanate 1 **IDDI** polyisocyanate (not inventive):

In a 500 mL three-neck flask with septum, internal thermometer and reflux condenser, IDDI (139.11 g) was charged and the mixture was tempered to 60°C. The NCO value of this mixture was 42.8%. Subsequently, catalyst (5-azaspiro[4.5]decan-5-ium fluoride hydrofluoride) was added dropwise. The mixture was quenched with dodecylbenzenesulfonic acid (40% in iPrOH) upon reaching an NCO value of 40.7%. An attempt was then made to purify the resin by thin film distillation (190°C / 0.19 mbar). However, it was found that IDDI polyisocyanate resins are not suitable for purification by thin film distillation, as their melt viscosity is too high. By perforating with isooctane, a large portion of the IDDI could be removed from the resin. The resulting resin was not flowable and was dissolved 70% in boiling butyl acetate. After cooling to room temperature, the resin precipitated again as a colorless solid after 24h.

| | |
|---|---|
| NCO content (solid resin): | 21.3% |
| NCO content (70% BA): | 14.9% |
| Viscosity (70% BA): | initially 3500 mPas, after 24h: solid precipitate |

**Polyisocyanate 2 ISODI polyisocyanate** (not inventive):

In a 500 mL three-neck flask with septum, internal thermometer and reflux condenser, ISODI (139.11 g) was charged and the mixture was tempered to 60°C. The NCO value of this mixture was 42.8%. Subsequently, catalyst (5-azaspiro[4.5]decan-5-ium fluoride hydrofluoride) was added dropwise. The mixture was quenched with dodecylbenzenesulfonic acid (40% in iPrOH) upon reaching an NCO value of 40.7%. An attempt was then made to purify the resin by thin film distillation (190°C / 0.19 mbar). However, it was observed that this mixture is not suitable for purification by thin film distillation, as their melt viscosity is too high.

**Polyisocyanate 3 ISODI polyisocyanate with less than 0.05 eq alcohol** (not inventive):

In a 500 mL three-neck flask with septum, internal thermometer and reflux condenser, ISODI (239.8, 1.22 mol, 1.0 eq.) was charged and the mixture was tempered to 60°C. The NCO value of this mixture was 42.8%. Subsequently, 2-Ethylhexanol (3.77 g, 0.03 mol, 0.02 eq) was added and stirred till a NCO value of 41.2% was reached. After that, catalyst (5-azaspiro[4.5]decan-5-ium fluoride hydrofluoride, 24% in 2-ethylhexanol, 20 ppm on active content) was added dropwise. The mixture was quenched with dodecylbenzenesulfonic acid (40% in iPrOH) upon reaching an NCO value of 36.2% An attempt was then made to purify this mixture by thin film distillation (190°C / 0.19 mbar). However, it was observed that the reaction mixture is not suitable for purification by thin film distillation, as their melt viscosity is too high.

**Polyisocyanate 4 IDDI-flexibilized wih CAPA Polyol** (inventive)

In a 500 mL four-neck flask with septum, internal thermometer, reflux condenser and addition funnel, IDDI (198.20 g, 1.01 mol, 1.0 eq) was charged, degassed under reduced pressure and flushed with nitrogen. The mixture was heated to 60°C. The NCO value was 42.8%. Subsequently, CAPA 2067 A (79.2 g, 0.12 mol, 0.12 eq) was dosed over one hour and stirred until the NCO value of this mixture was 26.4%. Then, 1 g of catalyst (0.8% benzyltrimethylammonium hydroxide in methanol) was added dropwise, causing the mixture to heat up to 71°C. The mixture was quenched with dibutyl phosphate (0.03 g) upon reaching an NCO value of 20.8% and subsequently purified without issues by thin film distillation (150°C / 0.12 mbar). A highly viscous but flowable resin was obtained. This resin was then diluted with MPA to 80% solids content. After storage of the resin for 4 weeks at 24°C, no sign of solid formation could be observed.

| | |
|---|---|
| Isocyanurate structures : | 26 mol% |
| Allophanate structures : | 54 mol% |
| Urethane structures: | 20 mol% |
| NCO content (solid resin): | 10.0% |
| Solids content: | 80% in MPA |
| NCO content (80% MPA): | 7.7% |
| Viscosity (23°C, 80% BA): | 14000 mPas |

**Polyisocyanate 5 IDDI-flexibilized wih CAPA Polyol** (inventive)

In a 500 mL four-neck flask with septum, internal thermometer, reflux condenser and addition funnel, IDDI (101.00 g, 0.52 mol, 1.0 eq) was charged, degassed under reduced pressure and flushed with nitrogen. The mixture was heated to 60°C. The NCO value was 42.8%. Subsequently, CAPA 2067 A (19.8 g, 0.03 mol, 0.06 eq) was dosed over one hour and stirred until the NCO value of this mixture was 33.5%. Then, 1.0 g of catalyst (0.8% benzyltrimethylammonium hydroxide in methanol) was added dropwise, causing the mixture to heat up to 68°C. The mixture was quenched with dibutyl phosphate (0.8 g) upon reaching an NCO value of 27.6% and subsequently purified without issues by thin film distillation (150°C / 0.09 mbar). A highly viscous but flowable resin was obtained. This resin was then diluted with BA to 80% solids content. After storage of the resin for 4 weeks at 24°C, no sign of solid formation could be observed.

| | |
|---|---|
| Isocyanurate structures : | 43 mol% |
| Allophanate structures : | 32 mol% |
| Urethane structures: | 25 mol% |
| NCO content (solid resin): | 11.6% |
| NCO content (80% BA): | 8.9% |
| Viscosity (23°C, 80% BA): | 15100 mPas |

(continued)

| | |
|---|---|
| Solids content: | 80% in BA |

**Polyisocyanate 6 ISODI-flexibilized with CAPA Polyol** (inventive)

In a 500 mL four-neck flask with septum, internal thermometer, reflux condenser and addition funnel, ISODI (161.20 g, 0.82 mol, 1.0 eq) was charged, degassed under reduced pressure and flushed with nitrogen. The mixture was heated to 60°C. The NCO value was 42.8%. Subsequently, CAPA 2067 A (64.0 g, 0.09 mol, 0.12 eq) was dosed over one hour and stirred until the NCO value of this mixture was 27.6%. Then, 0.68 g of catalyst (5-azaspiro[4.5]decan-5-ium fluoride hydrofluoride in 2-ethylhexanol, 144 ppm based on active component) was added dropwise, causing the mixture to heat up to 64°C. The mixture was quenched with dibutyl phosphate (0.37 g) upon reaching an NCO value of 21.6% and subsequently purified without issues by thin film distillation (150°C / 0.09 mbar). A highly viscous but flowable resin was obtained. This resin was then diluted with BA to 80% solids content. After storage of the resin for 4 weeks at 24°C, no sign of solid formation could be observed.

| | |
|---|---|
| Isocyanurate structures : | 25 mol% |
| Allophanate structures : | 40 mol% |
| Urethane structures: | 35 mol% |
| NCO content (solid resin): | 11.4% |
| NCO content (80% BA): | 8.6% |
| Viscosity (23°C): | 4814 mPas |
| Solids content: | 80% in BA |

**Polyisocyanate 7 IDDI-flexibilized with polyether monool** (inventive)

In a 250 mL four-neck flask with septum, internal thermometer, reflux condenser and addition funnel, IDDI (174.95 g, 0.89 mol, 1.0 eq) was charged, degassed under reduced pressure and flushed with nitrogen. The mixture was heated to 110°C. The NCO value was 42.8%. Subsequently, dibutyl phosphate (0.05 g) was added and Genapol LA030 (64.0 g, 0.13 mol, 0.15 eq) was dosed over 15 min and stirred until the NCO value of this mixture was 31.6%. Then, 0.51 g of catalyst (Borchi® Kat 22, 10% in MPA) was added dropwise. The mixture was quenched with phosphoric acid (0.37 g, 20% in iso- amyl alcohol) upon reaching an NCO value of 29.3% and subsequently purified without issues by thin film distillation (170°C / 0.50 mbar). A highly viscous but flowable resin was obtained. This resin was then diluted with BA to 90% solids content. After storage of the resin for 4 weeks at 24°C, no sign of solid formation could be observed.

| | |
|---|---|
| Isocyanurate structures : | 6 mol% |
| Allophanate structures : | 50 mol% |
| Urethane structures: | 44 mol% |
| NCO content (solid resin): | 10.9% |
| Solids content: | 90% in BA |
| NCO contente (90% BA): | 9.8% |
| Viscosity (23°C, 90% BA): | 1987 mPas |

**Polyisocyanate 8 ISODI-allophanate with alcohol** (inventive)

In a 1000 mL four-neck flask with septum, internal thermometer, reflux condenser and addition funnel, ISODI (750.00 g, 3.82 mol, 1.0 eq) was charged, degassed under reduced pressure and flushed with nitrogen. The mixture was heated to 60°C. The NCO value was 42.8%. Subsequently, a alcohol mixture containing 24,9 g of 2-Ethylhexanol (0.05 eq) and 24,9 g of 2-Ethylhexan-1,3-diole (0.05 eq) was added and stirred till a NCO value of 37.8% was reached. After that, catalyst (5-azaspiro[4.5]decan-5-ium fluoride hydrofluoride, 24% in 2-ethylhexanol, 41 ppm on active content) was added dropwise. The mixture was quenched with dodecylbenzenesulfonic acid (40% in iPrOH) upon reaching a NCO value of 30.2% and subsequently purified by thin film distillation (140°C / 0.001 mbar). A flowable resin with the following characteristics was obtained: Resin structure ($^{13}C$-NMR) from ISODI polyisocyanates, predominantly polyisocyanurates. The mixture was dissolved in 70% BA. After storage of the resin for 4 weeks at 24°C, no sign of solid formation could be observed.

| | |
|---|---|
| Isocyanurate structures : | 71 mol% |
| Allophanate structures : | 20 mol% |
| Urethane structures: | 9 mol% |
| NCO content (solid resin): | 19.0% |
| Solids content: | 70% in BA |
| NCO content (70% BA): | 12.5% |
| Viscosity (23°C, 70% BA): | 1080 mPas |

**Discussions of the obtained results:**

As apparent from the descriptions of examples 1, 2 and 3, isohexide diisocyanates can be oligomerized by catalytic means to obtain polyisocyanates. However, due to their high melt-viscosities, the polyisocyanates obtained can not be purified via technically relevant methods like thin-film-evaporation. Furthermore, the solubility of polyisocyanates which are solely based on isohexide based diisocyanates is limited and results in precipitation of the material (cf. example 1). For industrial application however, it is necessary to free the reaction mixture from excess monomeric diisocyanates and to get soluble polyisocyanates. As can be seen from inventive examples 4-8, trimerization of isohexide diisocyanates, which were partially reacted with flexibilizing polyols prior to trimerization, result in reaction mixtures which can be easily purified via thin-film-evaporation. These polyisocyanates contain high amounts of renewable isohexide polyisocyanates moieties while being highly soluble in common solvents, thus being applicable as crosslinkers for polyurethane chemistry.

**Claims**

**1.** Process for preparing a polyisocyanate composition comprising at least one isocyanurate structure and at least one allophanate structure, comprising

reacting a composition, comprising

A) (3R,3aR,6S,6aR)-3,6-diisocyanato-2,3,3a,5,6,6a-hexahydrofuro[3,2-b]furan and/or (3S,3aR,6S,6aR)-3,6-diisocyanato-2,3,3a,5,6,6a-hexahydrofuro[3,2-b]furan and/or (3R,3aR,6R,6aR)-3,6-diisocyanato-2,3,3a,5,6,6a-hexahydrofuro[3,2-b]furan,
B) at least one alcohol with an OH-functionality of ≥ 1
and
C) optionally at least one diisocyanate, different from the diisocyanate/s of component A),

wherein the equivalent ratio of OH-groups of component B) to NCO-groups of components A) and C) is ≥ 0.05:1 to ≤ 0.25 : 1,
to form a raw polyisocyanate composition,
and subjecting the raw polyisocyanate composition to a distillation, preferably to a thin film distillation, a short path distillation and/or a falling film distillation, in order to at least partially remove unreacted moieties of components A), B) and C) to obtain the polyisocyanate composition comprising at least one isocyanurate structure and at least one allophanate structure.

**2.** Process according to claim 1, wherein the at least one alcohol with an OH-functionality of ≥ 1 is selected from the group consisting of

B1) monomeric alcohols with an OH-functionality of ≥ 1,
B2) polymeric alcohols with an OH-functionality of 1 and
B3) polymeric alcohols with an OH-functionality of ≥ 1.

**3.** Process according to claim 2, wherein the monomeric alcohols with an OH-functionality of ≥ 1 of component B1) are compounds with a molecular weight of 32.04 g/mol to 250 g/mol, the chains of which can be saturated or unsaturated, linear or branched, aliphatic or cycloaliphatic or aromatic and preferably have 1 to 12 carbon atoms.

**4.** Process according to claim 2, wherein the polymeric alcohols with an OH-functionality of 1 of component B2) are polyether monools, which preferably have a hydroxyl number of 3 to 1000 mg KOH/g, measured according to DIN

53240-3:2016-03, and/or preferably have a number average molecular weight Mn in a range from 62 to 18 000 g/mol.

5. Process according to claim 2, wherein the polymeric alcohols with an OH-functionality of > 1 of component B3) are polyether polyols, polyester polyols and polycarbonate poylols, which preferably have a hydroxyl number of 3 to 1000 mg KOH/g, measured according to DIN 53240-3:2016-03, and/or preferably have a number average molecular weight Mn in a range from 62 to 18 000 g/mol.

6. Process according to any of claims 1 to 5, wherein the equivalent ratio of OH-groups of component B) to NCO-groups of components A) and C) is ≥ 0.05 :1 to ≤ 0.20:1, preferably ≥ 0.05 :1 to ≤ 0.15:1.

7. Process according to any of claims 1 to 6, wherein the reaction of component A), B) and optionally C) is thermally induced and/or conducted in the presence of at least one catalyst which accelerates the reaction.

8. Process according to any of claims 1 to 7, wherein the distillation is carried out in one or several evaporator stages, preferably in a vacuum and preferably at a temperature of≥100 to ≤ 200°C.

9. Polyisocyanate composition, obtainable or obtained by a process according to any of claims 1 to 8.

10. Polyisocyanate composition according to claim 9, **characterized by** a residual monomeric diisocyanate content of diisocyanates of components A) and C) of less than 1 % by weight, preferably less than 0.5 % by weight and more preferably less than 0.1 % by weight, based on the total weight of the polyisocyanate composition and determined by gas chromatography in accordance with DIN EN ISO 10283:2007-11 with internal standard.

11. Polyisocyanate composition according to claim 9 or 10, **characterized in** a NCO content of from 5.8 to 25.9% by weight, preferably from 7.8 to 24.9% by weight, particularly preferably from 9.7 to 23.9% by weight, based on the total weight of the polyisocyanate composition and determined in accordance with DIN EN ISO 11909:2007-05.

12. Polyisocyanate composition according to any of claims 9 to 11, containing at least one urethane structure iminooxadiazinedione structure, urea structure, uretdione structure, oxadiazinetrione structure, carbodiimide structure, thiourethane structure, thioallophanate structure and/or biuret structure in addition to the at least one isocyanurate structure and at least one allophanate structure, wherein the fractions of these structures are determined using NMR spectroscopic analysis as described in the specification.

13. Polyisocyanate composition according to claim 12, comprising an isocyanurate structure fraction of ≥ 5 to ≤ 80 mol%, preferably ≥ 20 to ≤ 75 mol%, in each case based on the total amount of isocyanurate, allophanate, iminooxadiazinedione, urethane, urea, uretdione, oxadiazinetrione, carbodiimide, thiourethane, thioallophanate and biuret structures in the polyisocyanate composition.

14. Polyisocyanate composition according to claim 12 or 13, comprising an allophanate group fraction of ≥ 10 to ≤ 65 mol%, preferably ≥ 15 to ≤ 60 mol%, in each case based on the total amount of isocyanurate, allophanate, iminooxadiazinedione, urethane, urea, uretdione, oxadiazinetrione, carbodiimide, thiourethane, thioallophanate and biuret structures in the polyisocyanate composition.

15. Polyisocyanate composition according to any of claims 9 to 14, wherein NCO-groups of the inventive polyisocyanate composition are completely or partially blocked with a blocking agent.

Europäisches Patentamt
European Patent Office
Office européen des brevets

# EUROPEAN SEARCH REPORT

Application Number
EP 24 21 8969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 296 260 A1 (COVESTRO DEUTSCHLAND AG [DE]) 27 December 2023 (2023-12-27)<br>* paragraph [0001]; claims 1-15 *<br>* paragraphs [0077], [0079]; examples *<br>----- | 1-15 | INV.<br>C08G18/77<br>C08G18/20<br>C08G18/28<br>C08G18/32<br>C08G18/42<br>C08G18/73<br>C08G18/79<br>C08G18/78<br>C08G18/72 |
| A | US 2012/073472 A1 (SPYROU EMMANOUIL [DE] ET AL) 29 March 2012 (2012-03-29)<br>* paragraph [0001]; claims 1-27 *<br>* paragraph [0066] - paragraph [0074]; examples *<br>* paragraphs [0069], [0070] *<br>----- | 1-15 | |
| A | JOACHIM THIEM ET AL: "Synthesis of Novel Polyurethanes and Polyureas by Polyaddition Reactions of Dianhydrohexitol Configurated Diisocyanates", MACROMOLECULAR CHEMISTRY AND PHYSICS, WILEY-VCH VERLAG, WEINHEIM, DE, vol. 202, no. 17, 5 December 2001 (2001-12-05), pages 3410-3419, XP002587388, ISSN: 1022-1352<br>* title; abstract *<br>* schemes 1-3; paragraph [3411] - paragraph [3412] *<br>----- | 1-15 | **TECHNICAL FIELDS SEARCHED (IPC)**<br>C08G |
| A | US 2012/071577 A1 (PFEFFER JAN [DE] ET AL) 22 March 2012 (2012-03-22)<br>* paragraph [0001]; claims 1-26 *<br>* paragraph [0016] - paragraph [0020] *<br>* paragraph [0042] - paragraph [0061] *<br>----- | 1-15 | |

The present search report has been drawn up for all claims

| Place of search | Date of completion of the search | Examiner |
|---|---|---|
| Munich | 30 April 2025 | Paulus, Florian |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 21 8969

This annex lists the patent family members relating to the patent documents cited in the above-mentioned European search report. The members are as contained in the European Patent Office EDP file on
The European Patent Office is in no way liable for these particulars which are merely given for the purpose of information.

30-04-2025

| Patent document cited in search report | Publication date | Patent family member(s) | Publication date |
|---|---|---|---|
| EP 4296260 A1 | 27-12-2023 | CN 119278196 A | 07-01-2025 |
| | | EP 4296260 A1 | 27-12-2023 |
| | | EP 4543852 A1 | 30-04-2025 |
| | | KR 20250026185 A | 25-02-2025 |
| | | WO 2023247525 A1 | 28-12-2023 |
| US 2012073472 A1 | 29-03-2012 | CN 102471452 A | 23-05-2012 |
| | | DE 102009027395 A1 | 05-01-2011 |
| | | DE 112010002792 A5 | 20-09-2012 |
| | | US 2012073472 A1 | 29-03-2012 |
| | | WO 2011000587 A1 | 06-01-2011 |
| US 2012071577 A1 | 22-03-2012 | CN 102471450 A | 23-05-2012 |
| | | DE 102009027394 A1 | 05-01-2011 |
| | | DE 112010002789 A5 | 08-11-2012 |
| | | US 2012071577 A1 | 22-03-2012 |
| | | WO 2011000586 A1 | 06-01-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011000587 A
- EP 0764633 A2


### Non-patent literature cited in the description


- **LAAS et al.** *J. Prakt. Chem*, 1994, vol. 336, 185-200
- **J. THIEM et al.** *Macromol. Chem. Phys*, 2001, vol. 202, 3410-3419